# EUROPEAN PATENT APPLICATION

(11) **EP 2 500 154 A1**
(43) Date of publication of application: **19.09.2012**
(21) Application number: 11158888.5
(22) Date of filing: 18.03.2011
(51) Int. Cl.: B26D 3/16, B26D 7/06, B26D 11/00

(54) **Cutting device**

(71) Applicant: Feltracon B.V., 4152 EM Rhenoy (NL)
(72) Inventor: Van Felius, Jan, 4152 EM Rhenoy (NL)
(74) Representative: Uittenbogaart, Gustaaf Adolf

(57) **Abstract**

The invention concerns a cutting device for cutting long and possibly irregular shaped products (P) such as carrots perpendicular to their longitudinal axis comprising a table (30), a push bar (21) for pushing the product in a straight path in a transport direction (39) over the table (30), a drive (23) for moving the push bar (21) in the transport direction, and a rotating knife (33,34) with a first rotation axis (55) perpendicular to the transport direction.
In accordance with the invention the push bar (21) passes in a straight and/or uninterrupted path (53) under the rotating knife (33,34) and cams (35) partly extending above the table (30) together with supports (31) on the push bar on both sides of the rotating knife push the product (7) towards and/or against the rotating knife (33,34).

## Description

The invention concerns a cutting device in accordance with the preamble of claim 1. Such cutting devices are known and in the known cutting devices the rotating knife is directly above or in the table and the push bar cannot move past the rotating knife and it has to make a reciprocating movement. This means that the rotating knife cannot cut a continuous flow of products and the device has a low capacity.

In order to overcome this disadvantage the cutting device is according to claim 1. In this way, the push bar can maintain its movement in the transport direction and pass under the rotating knife. The cams move the product upwards so that the rotating knife cuts through the whole section of the products. The supports on the push bar on both sides of the rotating knife maintain contact with the upwardly moved product so that the moving push bar maintains it contact with the product and the cut products are moved along the rotating knife.

In accordance with an embodiment the cutting device is according to claim 2. In this way, the cylindrical outer circumference supports the products in a stable way while the cam discs rotate during cutting around a stationary rotation axis and the push bars do not interfere with the cam discs as they pass under the rotating knife while in the cavities.

In accordance with an embodiment the cutting device is according to claim 3. In this way, it is possible that thin push bars move relatively heavy products at high speed over the table whereby in a preferred embodiment the guide notches position the supports accurately relative to the rotating knives.

In accordance with an embodiment the cutting device is according to claim 4. In this way, it is possible to have one rotatable part over the whole width of the table that is easy to clean.

In accordance with an embodiment the cutting device is according to claim 5. In this way, the transport belt pushes the product against the first rim and the rotating knife cuts a specific length of one of the ends of the product. This is advantageous as for many agricultural products the ends have a reduced taste or have a less perfect appearance.

In accordance with an embodiment the cutting device is according to claim 6. In this way, both ends of the product are cut off.

In accordance with an embodiment the cutting device is according to claim 7. In this way, the same length is cut from both ends of the product so that for products that have different ends, such as agricultural products that may have a top and a bottom, it is not important which end is at the side of the first rim or of the second rim.

In accordance with an embodiment the cutting device is according to claim 8. In this way, the long product is cut in shorter parts that are suitable for further use.

In accordance with an embodiment the cutting device is according to claim 9. In this way, the push bars position only one product at a time in front of the rotating knife which makes cutting the product more accurate.

In accordance with an embodiment the cutting device is according to claim 10. In this way, the positioning drive can position the duct so that the product that moves through the duct towards the transport plane and is directed to land on the table between two push bars and not on a push bar. This prevents undesired situations of the product hanging halfway over the push bar or a product colliding with a push bar. These undesired situations could lead for some products to malfunction and would reduce the capacity of the cutting device.

In accordance with an embodiment the cutting device is according to claim 11. In this way, products to be cut can be unloaded on the rotating cone and are separated and positioned in longitudinal direction on the rotating ring so that they can be propelled to between the feeder belts and positioned between the push bars.

Hereafter the invention is illustrated in an embodiment of an installation for cutting carrots with the aid of a drawing. In the drawing
Figure 1 shows a top view of the installation for cutting carrots comprising a separation device, a feeding device, and a cutting device,
Figure 2 shows a perspective view of a detail of the feeding device feeding carrots onto the cutting device of figure 1,
Figure 3 shows a perspective view of the cutting device of figure 1,
Figure 4 shows a detail of the perspective view of figure 3,
Figure 5 shows the perspective view of the first cutting knife of the cutting device of figure 1, and
Figure 6 shows section VI-VI of figure 1.

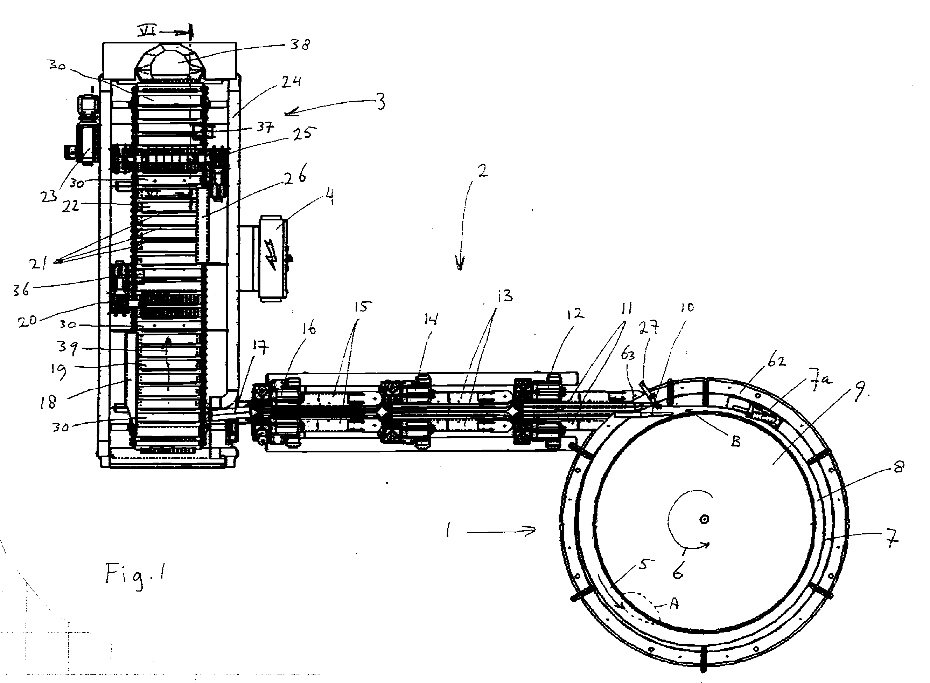

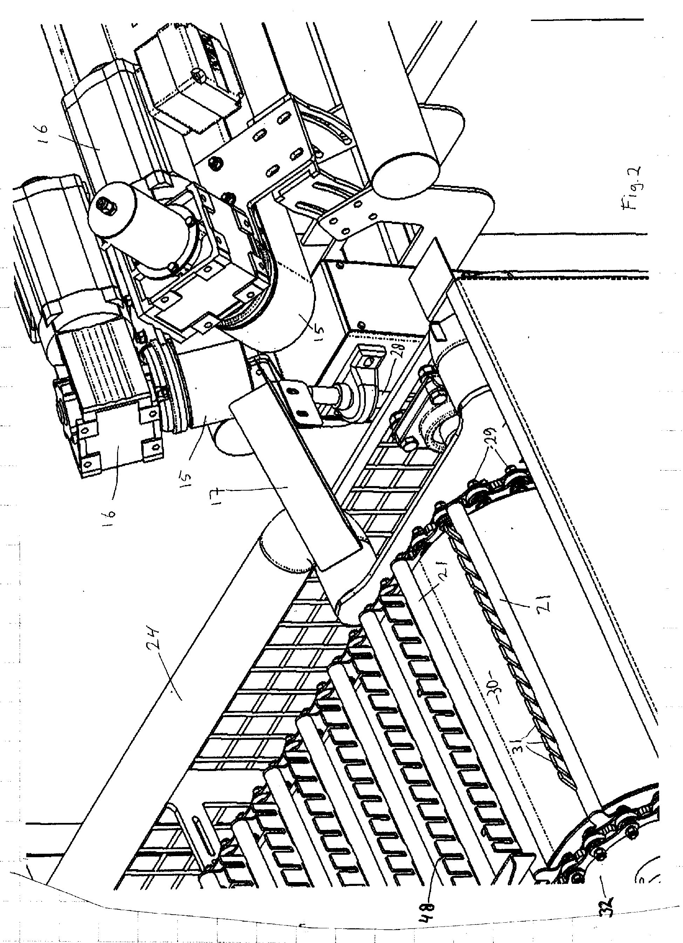

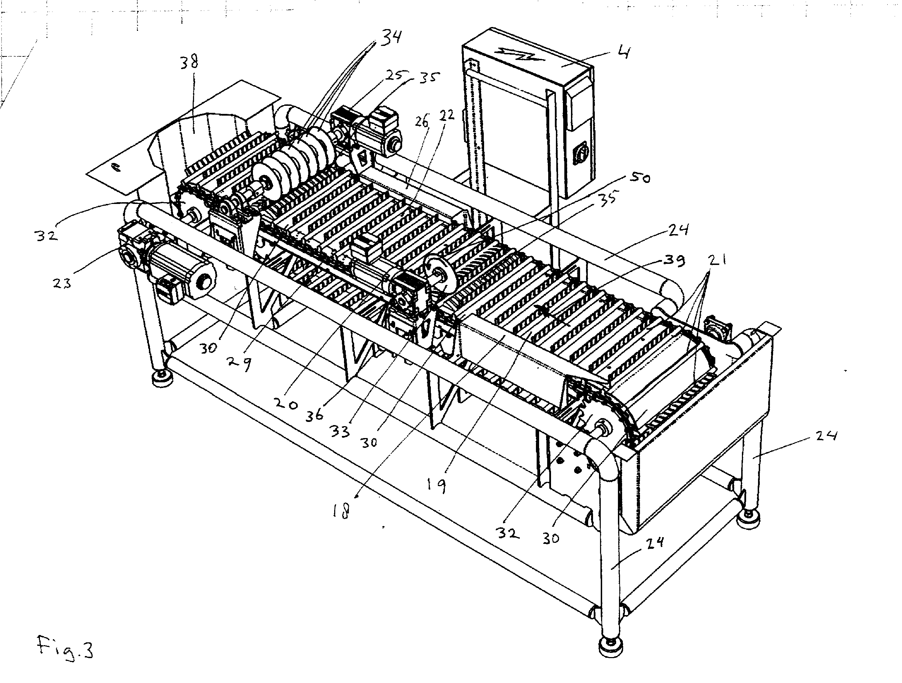

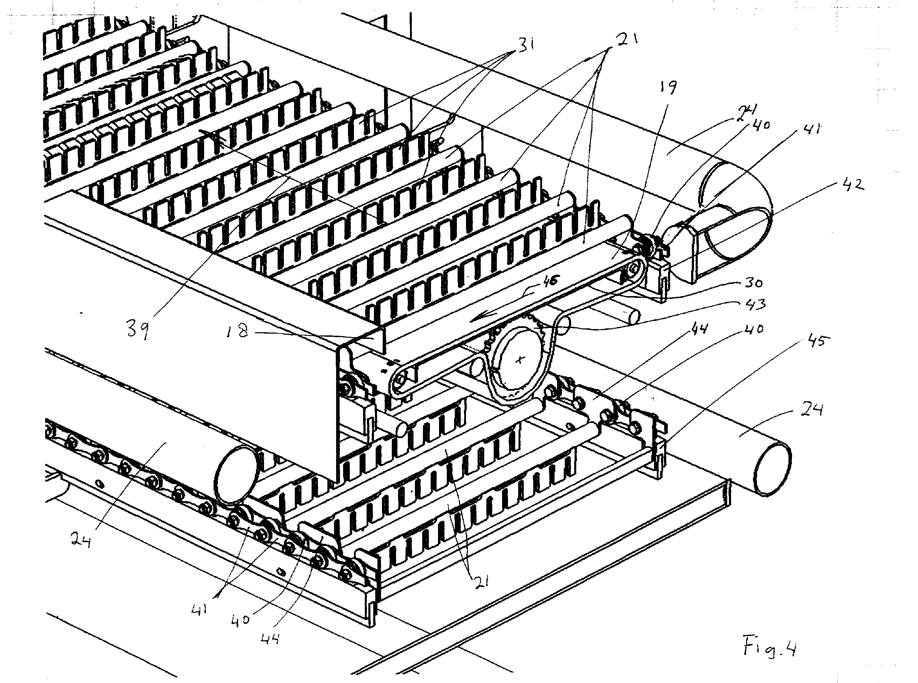

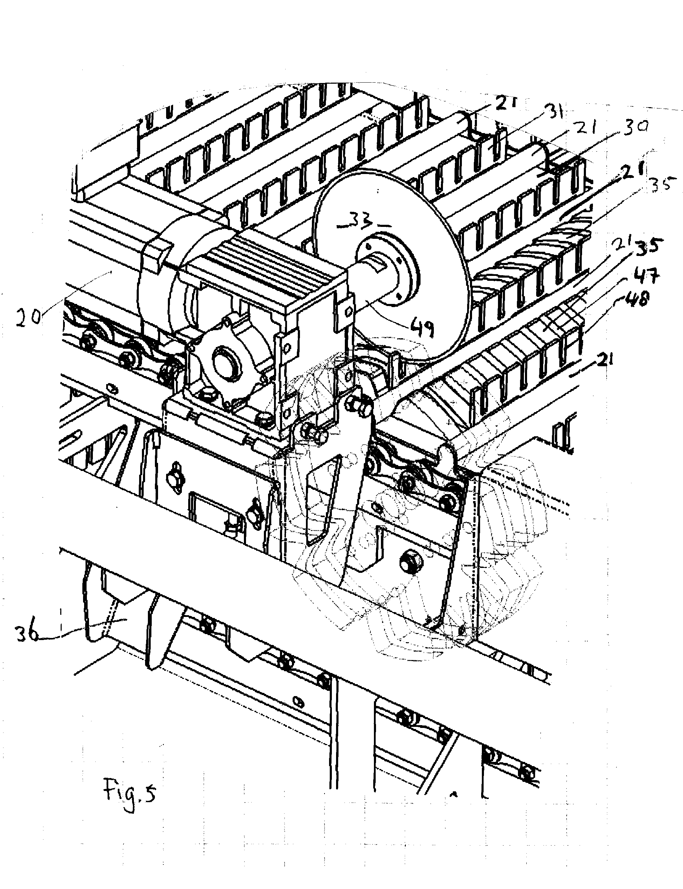

The installation for cutting carrots as shown in figures 1-6 comprises a product separator 1, feeder belts 2, the cutting assembly 3, and a control assembly 4. The installation is designed for automatically cutting four carrots per second, whereby in the cutting device first one end of the carrot is cut off and discharged, next the second end of the carrot is cut off and discharged. The remaining part of the carrot is cut in small parts that are suitable to be cut into julienne. As an example the typical dimensions of the carrots cut in this installation are 25 to 75 mm diameter and 200 to 400 mm length. As with all agricultural products, these dimensions may vary greatly.

The products such as carrots that are to be cut are unloaded on a cone 9 that can rotate in a direction 6. Around the cone 9 is a ring 8 that can rotate in the direction 5. Around the ring 8 is a stationary ring 62. In the loading area A the top side of the ring 8 and the cone 9 are approximately at the same level, so that the products lying on the cone 9 move onto the ring 8. Immediately above the ring 8 is a circular wall 7 along which the products supported by ring 8 can slide and which wall 7 narrows the available width of the ring 8. When products are side-by-side on the ring 8 the narrowing width pushes one of the products back onto the cone 9. If a product is partly on top of another product a height limit 7a pushes against the product on top and one of the products falls back onto the cone 9. This means that products on the ring 8 that arrive in a feeder area B are one behind the other and a separation guide 10 guides the products one after the other in a slot 63 in the stationary ring 62 and so between first acceleration belts 11.

The first acceleration belts 11 increase the speed of the separated product P. A first belt drive 12 drives each first acceleration belt 11. Second acceleration belts 13 increase the speed of the product P further; a second belt drive 14 drives each second acceleration belt 13. Third acceleration belts 15 increase the speeds of the product P further to such a speed that it can be thrown while guided by a duct 17 on the table 30 between push bars 21 of the cutting assembly 3. The increasing speed of the product P by the successive belts 11, 13, and 15 increases the distance between the successive products, so that a positioning drive 28 has time to direct the duct 17 in such a way that the product P is thrown between push bars 21 and not partly on one of the push bars 21.

A chain drive 23 rotates chain wheels 32 that are mounted in a frame 24 and the chain wheels 32 rotate in a rotation direction 60. A chain 29 is looped around the chain wheels 32 and the ends of the push bars 21 are coupled to the chain 29. In the chain drive 23 a sensor (not shown) detects the position of the push bars 21 relative to the duct 17. A product sensor 27 detects the moment that a product P enters between the first acceleration belts 11. An algorithm in the control system of the control assembly 4 determines when this detected product P passes through the duct 17. Based on the detected position of the push bars 21 and the calculated position of the push bars 21 when the product P leaves the duct 17, the algorithm can determine the direction wherein the positioning drive 28 must direct the duct 17 so that the product P lands between two push bars 21.

Products P that are stiff and do not or hardly bend fall either to one side or the other side of the push bar 21 are so will always end up between two push bars 21 especially at high speeds of the push bars 21. The push bars 21 have a pitch distance of 100 to 150 mm and when four carrots can be cut per second, this means that the push bars 21 have a speed of approximately 0.5 m per second and the product falling between the push bars 21 must be accelerated to that considerable speed. This means there is no fear that the described type of products P will stay resting on top of the push bar 21 and that the products P will always fall between the push bars 21. In that situation the duct 17 can be stationary and there is no positioning drive 28 and no associated control algorithm.

The chain 29 has outer linkplates 44 and inner link plates 41 with a notch and the push bars 21 are fastened on the outer linkplates 44. Between the inner linkplates 41 the chain 29 has chain rollers 40 that roll around link pins that connect the inner link plates 41 and the outer link plates 44. The chain rollers 40 roll over an upper chain guide 42 or a lower chain guide 45. The upper chain guides 42 guide the notches of the outer link plates 44 so that the push bars 21 are aligned in a transport direction 39 while they move over a table 30. The push bars 21 have supports 31 that extend upwards above the table 30 and that push the product P over the table in the transport direction 39. Between the supports 31 are openings 48 through which a rotating knife 33, 34 can pass so that the push bars 21 can pass under the rotating knive 33,34. The maximum height of the push bar 21 at the location of the opening 48 is a first distance a. Due to the notches of the outer link plates 44 the alignment of the push bars 21 is such that the openings 48 need to be only slightly wider than the thickness of the rotating knife 33, 34 so that the supports 31 support the product P to near the rotating knife 33, 34, which improves the quality of the cut.

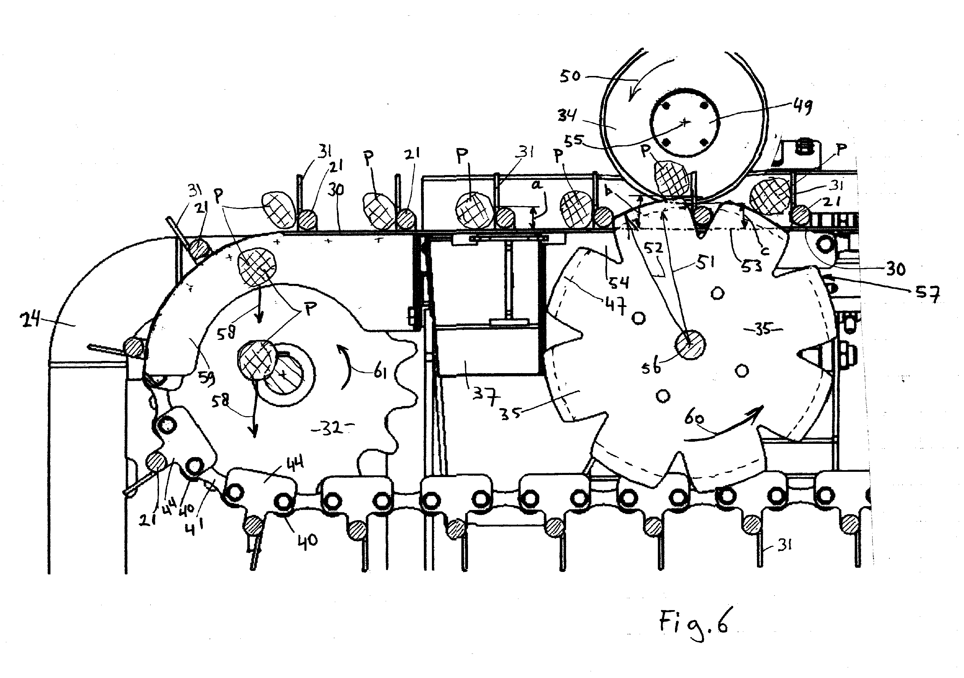

The push bars 21 between which a product P is thrown slide the product P over the table 30 till it is supported by a first positioning belt 19. The first positioning belt 19 can slide over the table 30. A belt drive 43 moves the first positioning belt 19 in transverse direction 46 so that the products P on the first positioning belt while moving in the transport direction 39, are pushed against a stop shield 18. The push bars 21 continue to push the products P towards the first rotating knife 33 that is located at a fixed distance from the stop shield 18, and the first rotating knife 33 cuts a fixed length from the end of the product P that was pushed against the stop shield 18. A first knife drive 20 rotates a shaft 49 that is coupled to the first knife 33 so that it rotates around a knife rotation axis 55 in a rotation direction 50 that pushes the approaching product P downwards and against the support 31. The cutting edge of the first rotating knife 33 is a third distance c above a push bar path 53 (see figure 6 that shows the cutting action at the location of a second rotating knife 34).

The third distance c is longer than the first distance a, so that all push bars 21 can pass under the rotating knife 33, 34 and follow the straight push bar path 53 as the chains 29 that guide the push bars 21 follow a straight path over the upper chain guide 42. At the location under the knife rotation axis 55 a cam disc 35 is located at both sides of the rotating knife 33 to support the product P during cutting by the rotating knife 33 and to push the product P upwards above the table 30 towards the rotating knife 33, 34. The cam disc 35 has a cam disc axis 56, a cylindrical surface 57 with an outer cam radius 52 that under the rotating knife 33, 34 pushes the product P upwards between the push bars 21, supports the product at both sides of the rotating knife 33, extends a second distance b above the push bar path 53 and has a cam groove 47 with an inner groove radius 51 at the location of the rotating knife 33. The cam disc 35 can either be a single part with the cam groove 47 at the location of the rotating knife 33,34, or it can be a combination of several cam discs 35 that rotate together around the cam disc axis 56 and that assembled in such a way that the cam groove 47 is at the location of the rotating knife 33,34. It will be clear that a cam groove 47 and a corresponding opening 48 are in a plane perpendicular to the knife rotation axis 45, the rotating knife 33 is in that same plane.

The push bars 21 follow a straight path 53, this path is intersects the cam discs 35. In order to make this intersection possible, the cam discs 35 have cavities 54 that are shaped such that the push bars 21 can pass and the teeth between the cavities 54 support the products P during cutting. For this, the second distance b is considerably larger than the third distance c. The push bars 21 interact with the cam discs 35 and cause them to rotate around the cam disc axis 56.

In another embodiment of the cutting device 3 cams activate parts on the push bars 21 to move the product P upwards against the rotating knife 33, 34. In a further embodiment cams located under the rotating knife 33, 34 in the plane of the table 30 resiliently push against the product upwards.

After the first rotating knife 33 has cut off the end of the product P, the push bar 21 pushes the product P and the cut off end over the cylindrical surface 57 of the cam disc 35 and the end falls through an opening in the table 30 into a first waste duct 36 and is removed. The push bar 21 pushes the remaining part of the product P in the transport direction 39 over a second positioning belt 22. The second positioning belt 22 pushes the product P in transverse direction until it is with its other end against a stop shield 26. The product P is now in the position to be cut by second knives 34, that are rotated by a second knife drive 25 and that cooperate with a second set of cam discs 35 in a similar way as described before. One of the second knives 34 cuts of the second end of the product P; this second end is discharged through an opening in the table 30 into a second waste duct 37. The other second knives 34 have cut the product P in parts 58 that the push bar 21 transports to the edge of the table 30 and the product parts 58 fall downwards in a product discharge 38 and are stored there for further use. A hood 59 protects the chain 29 and the chain wheel 32 from the falling parts 58.

The described embodiment of the invention is for cutting carrots. It is clear to the skilled man that the same or a similar design can also be used for cutting other products, such as cucumbers, parsnips and other vegetables or other products of a long shape.

## Claims

1. Cutting device for cutting long and possibly irregular shaped products (P) such as carrots perpendicular to their longitudinal axis comprising a table (30), a push bar (21) for pushing the product in a straight path in a transport direction (39) over the table, a drive (23) for moving the push bar in the transport direction, and a rotating knife (33, 34) with a first rotation axis (55) perpendicular to the transport direction, **characterized in that** the push bar (21) passes in a straight and/or uninterrupted path (53) under the rotating knife (33, 34) and cams (35) partly extending above the table (30) together with supports (31) on the push bar on both sides of the rotating knife push the product (P) towards and/or against the rotating knife.

2. Cutting device in accordance with claim 1 wherein the cams comprise rotatable cam discs (35) with a cylindrical outer circumference having cavities (54) for accommodating successive push bars (21) moving along the straight and/or uninterrupted path (53).

3. Cutting device in accordance with claim 1 or 2
wherein the push bars (21) extends between two chains (29) coupled to the drive (23) and preferably guide notches (44) guide the push bar in transverse direction.

4. Cutting device in accordance with claim 2 or 3
wherein the rotatable cam discs (35) at both sides of a rotating knife (33, 34) form a single part with a groove (47) at the location of the knife.

5. Cutting device in accordance with claim 1, 2, 3 or 4 wherein a first transport belt (19) on the table (30) in front of a first rotating knife (33) moves the product (P) perpendicular to the transport direction (39) against a first rim (18) at a side of the table.

6. Cutting device in accordance with claim 5 wherein a second transport belt (22) in front of a second rotating knife (34) moves the product (P) perpendicular to the transport direction (39) against a second rim (26) at a side of the table (30) that is opposite the first rim (18).

7. Cutting device in accordance with claim 6 wherein the distance between the first rotating knife (33) and the first rim (18) is equal to the distance between the second rotating knife (34) and the second rim (26).

8. Cutting device in accordance with claim 5, 6 or 7 wherein adjacent to the first rotating knife (33) or the second rotating knife (34) further rotating knives are mounted whereby the further rotating knives rotate around the rotation axis (55) of the first or second rotating knife.

9. Cutting device in accordance with one of the previous claims wherein a feeder for placing the products (P) in front of the push bars (21) comprises a separation device (1) and feeder belts (2) that throw a separated product (P) on the table (30) between the push bars (21) with the longitudinal axes of the product approximately perpendicular to the transport direction (39).

10. Cutting device in accordance with one of the previous claims wherein a feeder for placing the products (P) in front of the push bars (21) comprises a separation device (1) and feeder belts (2) that throw a separated product (P) on the table (30) between the push bars (21) with the longitudinal axes of the product approximately perpendicular to the transport direction (39), wherein the feeder belts comprise a first sensor (27) for determining the passage of a product, the device further comprising a second sensor for determining the positions of the push bars, a duct (17) with a positioning drive (28) for guiding the separated product during throwing, and a control system (4) with an algorithm for based on first sensor information and second sensor information calculating the setting the positioning drive.

11. Cutting device in accordance with claim 9 or 10 wherein the separation device (1) comprises a rotating cone (9) and a rotating ring (8) around the cone, whereby the rotating ring rotates around the rotating cone and is locally (A) level with the rotating cone and further higher than the rotating cone.
